# EUROPÄISCHE PATENTSCHRIFT

(11) **EP 3 881 958 B1**
(45) Veröffentlichungstag und Bekanntmachung des Hinweises auf die Patenterteilung: **19.07.2023**
(21) Anmeldenummer: 21153399.7
(22) Anmeldetag: 26.01.2021
(51) Int. Cl.: B23C 5/00, B23D 59/00, B23B 27/00, B23Q 11/00

(54) **WERKZEUG ZUR SPANENDEN BEARBEITUNG VON WERKSTOFFEN**
UNIT FOR MACHINING WORKPIECES
OUTIL POUR L'USINAGE DES MATIÈRES PAR ENLÈVEMENT DES COPEAUX

(30) Priorität: 13.03.2020 AT 502172020
(43) Veröffentlichungstag der Anmeldung: 22.09.2021
(73) Patentinhaber: Holzprofi Austria GmbH, 4661 Roitham (AT)
(72) Erfinder: Myna, Roman, 1230 Wien (AT); Frömel-Frybort, Stephan, 1080 Wien (AT); Wimmer, Rupert, 5431 Kuchl (AT); Liebner, Falk, 3400 Klosterneuburg (AT); Hellmayr, Raphaela, 1180 Wien (AT); Georgiades, Maria, 1070 Wien (AT); Nüssel, Luca, 1090 Wien (AT); Leiter, Lena Maria, 1160 Wien (AT)
(74) Vertreter: Puchberger & Partner Patentanwälte

(56) Entgegenhaltungen:
- WO-A1-2015/018842
- WO-A1-2018/162528
- DE-T2- 69 722 575

## Beschreibung

Die vorliegende Erfindung betrifft ein Werkzeug zur spanenden Bearbeitung von Werkstoffen sowie ein Verfahren zur Verringerung der Feinstaubemissionen gemäß den unabhängigen Patentansprüchen. Derartige Werkzeuge sind z.B. aus der WO 2015/018842 bekannt. Aus der WO2018162528 ist ein Verfahren zur Verringerung der Feinstaubemissionen bekannt.

Die spanende Bearbeitung von Werkstoffen führt zum Materialabtrag des Werkstoffs. Abhängig vom jeweiligen Bearbeitungsverfahren und vom zu bearbeitenden Werkstoff kann bei der Bearbeitung Staub und insbesondere Feinstaub gebildet werden. Da der Staub zu unerwünschten Verunreinigungen der Arbeitsumgebung führen und beim Einatmen gesundheitsschädlich wirken kann, ist eine Abführung des Staubs mit kostspieligen Abscheide- und Absaugeinrichtungen oder dergleichen erforderlich. Ferner muss ein Benutzer des Werkzeugs vor einer Exposition mit dem Staub geschützt werden

Die Schwierigkeit der Absaugung und die potenzielle Gesundheitsgefahr der entstehenden Stäube steigen mit sinkender Größe der Staub- oder Feinstaubpartikel. Feinstaubpartikel mit Partikeldurchmessern im niedrigen Mikrometerbereich sind besonders kritisch, da diese lungengängig sein können und zu deren Absaugung spezielle Filtereinrichtungen erforderlich sind.

Es wäre daher wünschenswert, wenn bei der Bearbeitung von Werkstoffen größere Partikel entstehen würden, die leichter abführbar bzw. abscheidbar und gleichzeitig weniger gesundheitsschädlich sind. Bei der Bearbeitung von bestimmten Werkstoffen, beispielsweise Holz, bzw. bei der Verwendung bestimmter Werkzeuge, beispielsweise bei Schleifwerkzeugen, ist die Größe der entstehenden Partikel bei Beibehaltung der Bearbeitungsqualität jedoch nicht frei wählbar.

Aufgabe der Erfindung ist es nun, die Feinstaubemissionen bei der spanabhebenden Bearbeitung von Werkstoffen zu reduzieren.

Dabei soll die Qualität der spanabhebenden Bearbeitung nicht beeinträchtigt werden. Zusätzlich soll die Lösung kosteneffizient und einfach im Aufbau sein. Bevorzugt soll die Lösung bei bestehenden Anlagen zur spanabhebenden Bearbeitung einfach nachgerüstet werden können.

Weitere Aufgaben können darin gesehen werden, ein Werkzeug zu schaffen, das dazu geeignet ist, bei der spanabhebenden Bearbeitung von Werkstoffen Stäube zu bilden, die leichter aus der Luft absaugbar und gesundheitlich weniger bedenklich sind. Noch weitere Aufgaben können darin gesehen werden, eine schnellere Absinkgeschwindigkeit der Staubpartikel und eine geringere Staubwolkenbildung zu ermöglichen.

Im Rahmen der vorliegenden Erfindung wurde gefunden, dass zumindest einige der oben genannten Aufgaben durch die Agglomeration von Staubpartikeln gelöst werden können. Die agglomerierten Partikel weisen im Vergleich zu den Einzelpartikeln insbesondere einen größeren Strömungsquerschnitt auf und weisen somit strömungsdynamische Eigenschaften auf, die jenen von größeren Partikeln ähneln.

Eine derartige Agglomeration kann durch unterschiedliche, insbesondere entgegengesetzte, triboelektrische Aufladung von Anteilen der erzeugten Partikel erreicht werden. Überraschenderweise ist eine derartige Aufladung durch die Bereitstellung triboelektrisch unterschiedlich wirkender Aufladebereiche direkt am Werkzeug möglich.

Die Erfindung betrifft somit bevorzugt ein Werkzeug, das zur spanenden Bearbeitung von Werkstoffen eingerichtet ist und einen Grundkörper und wenigstens ein am Grundkörper angeordnetes Schneidelement umfasst. Insbesondere betrifft die Erfindung ein Zerspanungswerkzeug wie beispielsweise ein Sägewerkzeug, ein Fräswerkzeug, ein Schleifwerkzeug oder ein Bohrwerkzeug.

Erfindungsgemäß ist vorgesehen, dass am Werkzeug mindestens zwei triboelektrisch unterschiedlich wirkende Aufladebereiche vorgesehen sind, die den beim Spanen entstehenden Feinstaub durch entgegengesetzte triboelektrische Aufladung zu Feinstaubagglomeraten agglomerieren.

Gegebenenfalls sind am Werkzeug mindestens zwei triboelektrisch unterschiedlich wirkende Bereiche vorgesehen, die dazu eingerichtet sind, den beim Spanen entstehenden Feinstaub durch entgegengesetzte triboelektrische Aufladung zu Feinstaubagglomeraten zu agglomerieren.

"Triboelektrisch wirkend" im Sinne der vorliegenden Erfindung bedeutet insbesondere, dass die Aufladebereiche aus einem Material gebildet sind oder ein Material umfassen, das eine triboelektrische Ladung des Werkstoffs und/oder des Staub des Werkstoffs bewirken kann.

"Feinstaub" bezeichnet im Sinne der vorliegenden Erfindung insbesondere eine Ansammlung von Partikeln, bei der die Partikel jeweils einen mittleren Durchmesser von kleiner als 100 µm, bevorzugt von kleiner als 20 µm, aufweisen.

"Agglomeration" im Sinne der vorliegenden Erfindung bedeutet insbesondere, dass aus mehreren einzelnen Partikeln des Staubs oder Feinstaubs Partikelagglomerate gebildet werden, die einen größeren mittleren Durchmesser aufweisen als die einzelnen Partikel.

"Am Werkzeug" bedeutet im Sinne der vorliegenden Erfindung insbesondere, dass der jeweilige Aufladebereich an der Oberfläche des Werkzeugs angeordnet ist oder sich bis an die Oberfläche des Werkzeugs erstreckt. Dadurch kann der Aufladebereich mit dem Werkzeug bzw. mit dem bei der Bearbeitung gebildeten Staub in Kontakt gebracht werden, wodurch eine triboelektrische Aufladung ermöglicht wird.

Die Aufladebereiche können unterschiedlich ausgeformt sein. Ein Aufladebereich kann beispielsweise durch das Grundmaterial des Werkzeugs gebildet sein. Ein Aufladebereich kann durch eine Beschichtung am Grundmaterial, am Grundkörper oder am Schneidelement gebildet sein. Gegebenenfalls können unterschiedliche Aufladebereiche durch unterschiedliche Beschichtungen des Grundmaterials, des Grundkörpers oder des Schneidelements gebildet sein.

Die Materialien der Aufladebereiche, insbesondere die triboelektrischen Eigenschaften der Aufladebereiche, sind bevorzugt an die zu bearbeitenden Werkstoffe angepasst. Die Agglomeration der einzelnen Partikel wird verbessert, wenn eine Teilmenge der Partikel bei Kontakt mit dem Werkzeug positiv aufgeladen wird, während eine andere Teilmenge negativ aufgeladen wird.

Dies kann insbesondere dadurch erreicht werden, dass das Material eines ersten Aufladebereichs in der triboelektrischen Reihe unter dem zu bearbeitenden Werkstoff liegt, während das Material eines zweiten Aufladebereichs in der triboelektrischen Reihe über dem zu bearbeitenden Werkstoff liegt.

Die "triboelektrische Reihe" gibt insbesondere die Elektronenaffinität eines Materials an. Liegt ein erstes Material in der triboelektrischen Reihe über einem zweiten Material, wird bei Kontakt zwischen erstem Material und zweitem Material das erste Material elektrostatisch negativ aufgeladen und das zweite Material wird elektrostatisch positiv aufgeladen.

In einer bevorzugten Ausführungsform sind die Aufladebereiche beabstandet vom Schneidelement oder beabstandet von den Schneidelementen des Werkzeugs und/oder angrenzend an diese(s) angeordnet. Die Aufladebereiche des Werkzeugs sind also bei dieser Ausführungsform bevorzugt nicht an den Schneidelementen angeordnet. Dies gilt insbesondere in jenen Fällen, in welchen der Aufladebereich durch eine Beschichtung gebildet ist. Dadurch wird eine übermäßige Abnützung der Beschichtung verhindert, da an den Schneidelementen des Werkzeugs besondere hoher abrasiver Verschleiß auftritt.

Bevorzugt sind die Aufladebereiche dauerhaft am Werkzeug angeordnet. Sie sind somit insbesondere nicht dazu ausgebildet, nach einer bestimmten Betriebsdauer abgerieben oder anderweitig entfernt zu werden. Daher wird ein Aufladebereich insbesondere nicht durch Korrosionsschutzschichten, Verschleißschichten oder dergleichen gebildet.

Das Werkzeug der Erfindung kann insbesondere bei allen Werkstoffen eingesetzt werden, bei welchen die Materialien der Aufladebereiche so ausgewählt werden können, dass sich eine entgegengesetzte Aufladung des entstehenden Staubs ergibt. Bevorzugte Beispiele für Werkstoffe, die mit einem Werkzeug der Erfindung bearbeitbar sind und bei welchen die oben beschriebenen Effekte vorteilhaft gezeigt werden können sind Massivholz; Vollholz; biobasierte Werkstoffe; Werkstoffe auf Basis nachwachsender Rohstoffe, etwa Spanplatten, Faserplatten, Oriented Strand Board, Holzwolleplatten, Heraklit; Kompositwerkstoffe; Verbundwerkstoffe; Laminat-Werkstoffe; naturfaserverstärke Kunststoffe; faserverstärkte Kunststoffe, etwa Glasfaser GFK, Carbonfaserverbundwerkstoffe CFK.

Beispiele für spanende Bearbeitungsverfahren, für die ein Werkzeug der vorliegenden Erfindung geeignet sein kann sind unter anderem Schleifen, Hobeln, Fräsen, Bohren, Sägen, Bürsten.

Die triboelektrische Aufladung des Staubs oder Feinstaubs kann insbesondere durch Kontakt der Aufladebereiche mit dem Werkstoff und/oder mit dem Staub selbst erfolgen.

Bei der Agglomeration entgegengesetzt triboelektrisch aufgeladener Partikel kommt es zu einer Neutralisierung der Ladung der Partikel. Dadurch lassen sich die Agglomerate noch leichter abscheiden. In einer vorteilhaften Ausführungsform sind die Aufladebereiche so ausgestaltet, dass im Wesentlichen die gleiche Zahl an positiven und negativen Ladungen erzeugt wird, wodurch nach der Agglomeration der Partikel im Wesentlichen eine überwiegende Neutralisierung der Ladungen erreicht werden kann.

Dadurch sind die erzeugten Agglomerate im Wesentlichen frei von elektrostatischen Ladungen bzw. neutral und können dadurch leichter abgesaugt werden.

Derartige, aus makroskopischer Sicht im Wesentlichen neutralisierte Partikel bzw. Partikel mit im Wesentlichen neutralen Oberflächen, verursachen in weiterer Folge einen geringeren oxidativen Stress im Lungengewebe.

Ein Aufladebereich kann eines oder mehrere der folgenden Materialien umfassen oder daraus bestehen: Metall, Kunststoff, Keramik, Glas.

Gegebenenfalls kann der erste Aufladebereich ein Phenol-Polymermaterial umfassen oder daraus bestehen und der zweite Aufladebereich kann ein Melamin-Polymermaterial umfassen oder daraus bestehen.

Ein Werkzeug der vorliegenden Erfindung kann mit einer Werkzeugmaschine verwendet werden. Ist das Werkzeug beispielsweise ein Bohrer kann dieser mit einer Bohrmaschine verwendet werden.

Eine spanende Bearbeitung, die eine Feinstaubemission ermöglicht, kann beispielsweise wie folgt ablaufen.

In einem ersten Schritt kann das erfindungsgemäße Werkzeug in eine Werkzeugmaschine eingesetzt werden bzw. wird die Werkzeugmaschine mit dem Werkzeug ausgestattet. Je nach Werkzeug und Werkzeugmaschine kann dies auf dem Fachmann bekannte Arten erfolgen.

Das Werkzeug wird dem zu bearbeitenden Werkstoff bzw. dem zu bearbeitende Werkstück zugestellt und das Werkzeug wird über den Werkstoff/das Werkstück bewegt. In Anpassung an den gewünschten Bearbeitungsschritt und das Werkzeug kann eine Drehzahl, eine Geschwindigkeit, usw. des Werkzeugs festgelegt werden. Ferner kann festgelegt werden, mit welcher Vorschubgeschwindigkeit das Werkzeug über den Werkstoff/das Werkstück bewegt wird.

Tritt das Werkzeug mit dem Werkstoff/dem Werkstück in Kontakt, kommt es zu einer spanenden Abtragung des Materials und zu einer Staubbildung. Bei Verwendung eines erfindungsgemäßen Werkzeugs erfolgt gleichzeitig mit der Abtragung und insbesondere bei Abtragung des Materials eine triboelektrische Aufladung der erzeugten Staubpartikel und/oder der Werkstückoberfläche.

Die triboelektrisch unterschiedlich aufgeladenen Partikel agglomerieren durch ihre entgegengesetzte Ladung und bilden dadurch Agglomerate, die einen größeren Durchmesser aufweisen als die einzelnen Partikel.

Die agglomerierten Partikel können eine schnellere Absinkgeschwindigkeit aufweisen als einzelne Partikel, wodurch die Feinstaubbelastung der das Werkzeug umgebenden Atmosphäre reduziert wird. In einem weiteren Schritt oder alternativ zur Freisetzung der Partikel kann eine Absaugung bzw. eine Abscheidung der Agglomerate erfolgen, sodass diese aus der Umgebung abgeführt werden. Agglomerierte Partikel sind aufgrund ihrer größeren Masse typischerweise einfacher aus der Umgebung abzuscheiden. Eine derartige Abscheidung kann beispielsweise mit einem Fliehkraftabscheider erfolgen.

Die Erfindung betrifft bevorzugt ein Werkzeug, eingerichtet zur spanenden Bearbeitung von Werkstoffen, umfassend einen Grundkörper und wenigstens ein am Grundkörper angeordnetes Schneidelement. Das Werkzeug ist insbesondere ein Zerspanungswerkzeug wie ein Sägewerkzeug, Fräswerkzeug, Schleifwerkzeug oder Bohrwerkzeug.

Bevorzugt ist vorgesehen, dass am Werkzeug mindestens zwei triboelektrisch unterschiedlich wirkende Aufladebereiche vorgesehen sind, die den beim Spanen entstehenden Feinstaub durch entgegengesetzte triboelektrische Aufladung zu Feinstaubagglomeraten agglomerieren.

Gegebenenfalls ist vorgesehen, dass wenigstens einer der Aufladebereiche durch ein Material gebildet ist, das vom Material des Schneidelements und des Grundkörpers unterschiedlich ist.

Gegebenenfalls ist vorgesehen, dass ein erster Aufladebereich mit einem ersten Material und ein zweiter Aufladebereich mit einem zweiten Material vorgesehen sind, wobei die Materialien der Aufladebereiche vom Material/den Materialien des Schneidelements und des Grundkörpers unterschiedlich sind.

Gegebenenfalls ist vorgesehen, dass die Bereiche nicht am Schneidelement des Werkzeugs angeordnet sind und/oder nicht durch das Schneidelement des Werkzeugs gebildet sind.

Gegebenenfalls ist vorgesehen, dass die Bereiche streifenförmig, segmentförmig und/oder sektorförmig am Werkzeug angeordnet sind.

Gegebenenfalls ist vorgesehen, dass entlang einer Bearbeitungsrichtung und/oder einer Bewegungsrichtung des Werkzeugs abwechselnd ein erster Aufladebereich und ein zweiter Aufladebereich vorgesehen sind.

Gegebenenfalls ist vorgesehen, dass ein erster Bereich dazu ausgebildet ist, Holz-Feinstaub, insbesondere Hartholz-Feinstaub, triboelektrisch positiv aufzuladen, und dass ein zweiter Bereich dazu ausgebildet ist, Holz-Feinstaub, insbesondere Hartholz-Feinstaub, triboelektrisch negativ aufzuladen.

Gegebenenfalls ist vorgesehen, dass das Werkzeug ein Schleifwerkzeug ist, und dass mehrere Schneidelemente vorgesehen sind, die als Schleifbürsten ausgebildet sind, wobei das Material der Schleifbürsten in einem ersten Bereich vom Material der Schleifbürsten in einem zweiten Bereich unterschiedlich ist.

Gegebenenfalls ist vorgesehen, dass mehrere Schneidelemente von einem Bindemittel am Werkzeug gehalten sind, wobei das Material des Bindemittels in einem ersten Bereich vom Material des Bindemittels in einem zweiten Bereich unterschiedlich ist.

Gegebenenfalls ist vorgesehen, dass das Werkzeug ein Sägewerkzeug mit einem Sägeblatt ist, dass mehrere Schneidelemente vorgesehen sind, die als Sägezähne ausgebildet sind, und dass die Bereiche an der Planfläche des Sägeblatts angeordnet sind.

Gegebenenfalls ist vorgesehen, dass das Werkzeug ein Fräswerkzeug oder ein Bohrwerkzeug ist, und dass die Bereiche am Grundkörper des Fräswerkzeugs oder des Bohrwerkzeugs angeordnet sind.

Die Erfindung betrifft bevorzugt ferner eine Werkzeugmaschine umfassend ein erfindungsgemäßes Werkzeug.

Die Erfindung betrifft bevorzugt ferner ein Verfahren zur Verringerung der Feinstaubemissionen bei der spanenden Bearbeitung von Werkstoffen durch ein Werkzeug, insbesondere durch ein Zerspanungswerkzeug wie ein Sägewerkzeug, ein Fräswerkzeug, ein Schleifwerkzeug oder ein Bohrwerkzeug

Bevorzugt sind folgende Schritte vorgesehen:
- spanende Bearbeitung des Werkstoffs mit dem Werkzeug, wobei bei der spanenden Bearbeitung Feinstaub entsteht,
- Agglomerieren des Feinstaubs zu Feinstaubagglomeraten durch entgegengesetztes triboelektrisches Aufladen des Feinstaubs durch mindestens zwei triboelektrisch unterschiedlich wirkende Aufladebereiche des Werkzeugs.

Gegebenenfalls ist vorgesehen, dass das Verfahren zusätzlich folgenden Schritt umfasst:
- Absaugen der im Wesentlichen elektrisch neutralen Agglomerate.

Gegebenenfalls ist vorgesehen, dass wenigstens ein triboelektrisch wirkender Bereich des Werkzeugs dazu ausgebildet ist, den Feinstaub triboelektrisch positiv aufzuladen, und dass wenigstens ein weiterer triboelektrisch wirkender Bereich des Werkzeugs dazu ausgebildet ist, den Feinstaub triboelektrisch negativ aufzuladen.

Weitere Merkmale der Erfindung ergeben sich aus den Patentansprüchen, den Figuren und der Beschreibung der Ausführungsbeispiele.

Nachfolgend wird die Erfindung anhand von exemplarischen Ausführungsbeispielen im Detail erläutert. Die Ausführungsbeispiele dienen lediglich der Veranschaulichung der Erfindung und sollen den Schutzbereich der Ansprüche nicht einschränken.

Es zeigen:
Fig. 1 eine schematische perspektivische Ansicht eines Werkzeugs gemäß einem ersten Ausführungsbeispiel;
Fig. 2 eine schematische Aufsicht eines Werkzeugs gemäß einem zweiten Ausführungsbeispiel;
Fig. 3 eine schematische Aufsicht eines Werkzeugs gemäß einem dritten Ausführungsbeispiel;
Fig. 4 eine schematische perspektivische Ansicht eines Werkzeugs gemäß einem vierten Ausführungsbeispiel;
Fig. 5 eine schematische perspektivische Ansicht eines Werkzeugs gemäß einem fünften Ausführungsbeispiel; und
Fig. 6 eine schematische perspektivische Ansicht eines Werkzeugs gemäß einem sechsten Ausführungsbeispiel.

Sofern nicht anders angegeben, sind in den Figuren die Elemente erster Aufladebereich 1, zweiter Aufladebereich 2, Grundkörper 3, Werkzeug 4, Schneidelement 5, Schleifwerkzeug 6, Schleifbürste 7, Bindemittel 8, erstes Bindemittel 8', zweites Bindemittel 8", Sägewerkzeug 9, Sägeblatt 10, Sägezahn 11, Fräswerkzeug 12, Bohrwerkzeug 13, Planfläche 14, Trägermaterial 15, Bearbeitungsrichtung 16, Schleifborste 17, Rotationsachse 18, Bewegungsrichtung 19 gezeigt.

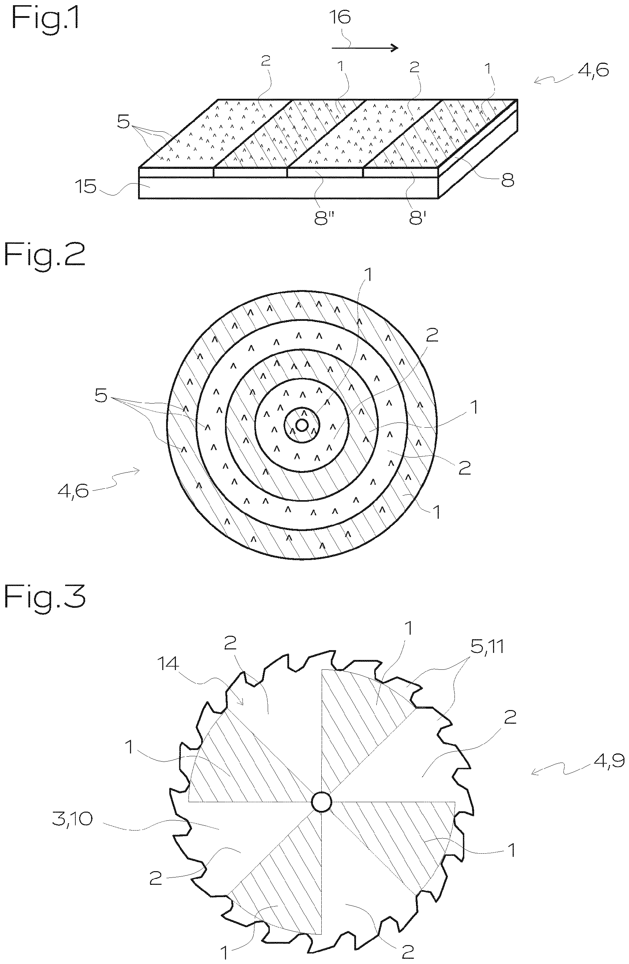

Fig. 1 zeigt eine schematische perspektivische Ansicht eines Werkzeugs 4 gemäß einem ersten Ausführungsbeispiel, wobei das Werkzeug 4 als Schleifwerkzeug 6 ausgebildet ist. Das Schleifwerkzeug 6 umfasst ein textiles Trägermaterial 15. Schneidelemente 5 im Form von Korund-Körnern werden durch ein Bindemittel 8 am Trägermaterial gehalten. Es sind zwei unterschiedliche Bindemittel 8 vorgesehen, wobei ein erster Aufladebereich 1 durch ein erstes Bindemittel 8` gebildet wird während ein zweiter Aufladebereich 2 durch ein zweites Bindemittel 8" gebildet wird. Die Bindemittel 8', 8" weisen unterschiedliche triboelektrische Eigenschaften auf, sodass beim Schleifen von beispielsweise Holz triboelektrisch entgegengesetzt aufgeladene Staubpartikel erzeugt werden, wodurch es zu einer Agglomeration der Partikel kommt.

In diesem Beispiel sind die Aufladebereiche 1, 2 streifenförmig abwechselnd angeordnet. Dies bedeutet, dass der Staub bzw. der Werkstoff bei Bewegung des Schleifwerkzeugs 6 entlang einer Bearbeitungsrichtung 16 abwechselnd mit dem ersten Aufladebereich 1 und dem zweiten Aufladebereich 2 in Kontakt kommt.

In diesem Beispiel ist das Bindemittel 8 des ersten Aufladebereichs 1 ein Phenolharz. Das Bindemittel 8 des zweiten Aufladebereichs 2 ist ein Melaminharz. Dadurch kann eine entgegengesetzte triboelektrische Aufladung von Staubpartikeln erreicht werden, die zu einer erfindungsgemäßen Agglomeration der Partikel führt. Das Schleifwerkzeug 6 dieses Ausführungsbeispiels kann unter anderem zum Schleifen von Fichtenholz eingesetzt werden.

In nicht dargestellten Ausführungsbeispielen sind unterschiedliche bereichsweise Anordnungen der Aufladebereiche 1, 2 möglich.

Alternativ zu zwei unterschiedlichen Bindemitteln 8', 8" kann wenigstens ein Aufladebereich 1, 2 durch eine Beschichtung gebildet werden, wobei die Beschichtung am Bindemittel 8 angeordnet ist (nicht dargestellt).

Fig. 2 zeigt eine schematische Aufsicht eines Werkzeugs 4 gemäß einem zweiten Ausführungsbeispiel, wobei das Werkzeug 4 als Schleifwerkzeug 6 ausgebildet ist. Das Schleifwerkzeug 6 gemäß diesem Ausführungsbeispiel ist ähnlich aufgebaut wie jenes aus dem ersten Ausführungsbeispiel. Im Unterschied zum ersten Ausführungsbeispiel sind die Aufladebereiche 1, 2 konzentrisch kreisförmig ausgebildet und die entgegengesetzte Seite des Schleifwerkzeugs 6 kann mittels einem Klettelement (nicht gezeigt) an einer Schleifmaschine befestigt werden.

Fig. 3 zeigt eine schematische Aufsicht eines Werkzeugs 4 gemäß einem dritten Ausführungsbeispiel, wobei das Werkzeug 4 als Sägewerkzeug 9 ausgebildet ist. Das Sägewerkzeug 9 umfasst ein Sägeblatt 10 als Grundkörper 3 mit daran angeordneten Sägezähnen 11 als Schneidelemente 5. Der erste Aufladebereich 1 und der zweite Aufladebereich 2 sind als Beschichtungen des Sägeblatts 10 ausgebildet. Die Aufladebereiche 1, 2 sind kreissektorförmig abwechselnd an der Planfläche 14 des Sägeblatts 10 angeordnet. Die Sägezähne 11 sind frei von Aufladebereichen 1, 2. Hier würde die Beschichtung aufgrund der starken mechanischen Belastung rasch abgetragen werden.

Die Aufladebereiche 1, 2 weisen unterschiedliche triboelektrische Eigenschaften auf, um bei der Bearbeitung eines Werkstoffs erzeugte Staubpartikel mit unterschiedlichen Ladungen beaufschlagen zu können.

In anderen nicht gezeigten Ausführungsbeispielen können insbesondere bei Sägewerkzeugen 9 die Aufladebereiche 1, 2 auch an gegenüberliegenden Planflächen 14 des Sägeblatts 10 angeordnet sein.

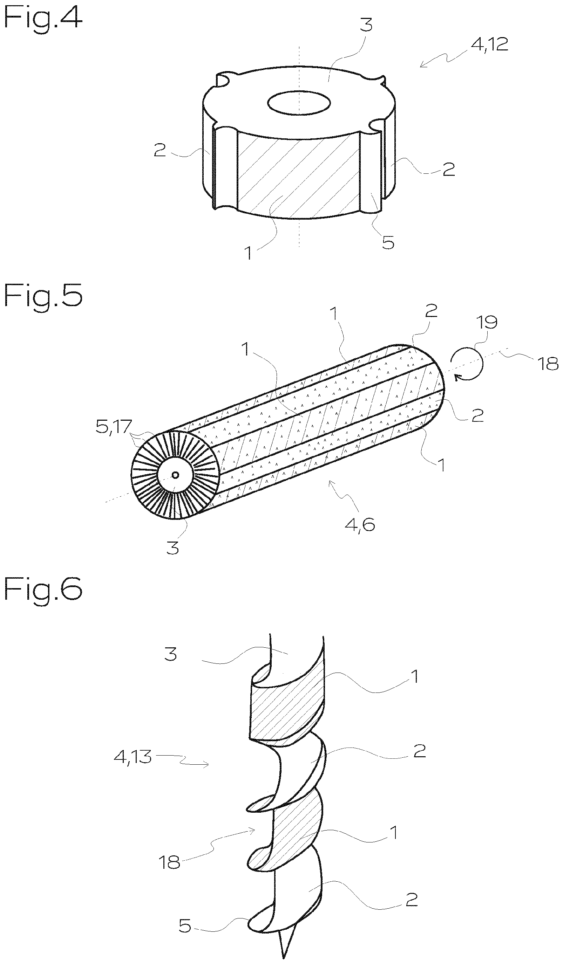

Fig. 4 zeigt eine schematische perspektivische Ansicht eines Werkzeugs 4 gemäß einem vierten Ausführungsbeispiel, wobei das Werkzeug 4 als Fräswerkzeug 12 ausgebildet ist. Das Fräswerkzeug 12 umfasst einen im Wesentlichen zylindrischen Grundkörper 3, an dessen äußeren Umfang Schneidelemente 5 angeordnet sind. Die Aufladebereiche 1, 2 werden durch Beschichtungen gebildet, die an der Oberfläche des Grundkörpers 3 angeordnet sind. An den Schneidelementen 5 sind keine Aufladebereiche 1, 2 vorgesehen.

Die Beschichtungen der Aufladebereiche 1, 2 werden durch unterschiedliche Materialien gebildet, die unterschiedliche triboelektrische Eigenschaften aufweisen.

Fig. 5 zeigt eine schematische perspektivische Ansicht eines Werkzeugs 4 gemäß einem fünften Ausführungsbeispiel, wobei das Werkzeug 4 als Schleifwerkzeug 6, insbesondere als Schleifbürste, ausgebildet ist.

Auf einem walzenförmigen Grundkörper 3 sind Schleifborsten 17 angeordnet, die als Schneidelemente 5 wirken. Die Schleifborsten 17 sind aus einem ersten Material und einem zweiten Material gebildet, wobei die Borsten 17 im ersten Aufladebereich 1 aus dem ersten Material und die Borsten 17 im zweiten Aufladebereich 2 aus dem zweiten Material gebildet sind. Die Materialien der Borsten 17 in den unterschiedlichen Aufladebereichen 1, 2 weisen unterschiedliche triboelektrische Eigenschaften auf.

Das Schleifwerkzeug 6 gemäß diesem Ausführungsbeispiel umfasst somit abwechselnd angeordnete streifenförmige Aufladebereiche 1, 2, die bei rotierendem Werkzeug 4 wechselweise mit dem Werkstoff in Kontakt gebracht werden. Das Schleifwerkzeug 6 rotiert bei bestimmungsgemäßer Verwendung in Bewegungsrichtung 19 um die Rotationsachse 18. Daher sind die Aufladebereiche 1, 2 in Bewegungsrichtung 19 des Werkzeugs 4 abwechselnd angeordnet.

Fig. 6 zeigt eine schematische perspektivische Ansicht eines Werkzeugs 4 gemäß einem sechsten Ausführungsbeispiel, wobei das Werkzeug 4 als Bohrwerkzeug 13, insbesondere als Spiralbohrwerkzeug, ausgebildet ist.

Das Bohrwerkzeug 13 umfasst ein einen Grundkörper 3 spiralförmig umlaufendes Schneidelement 5, wobei der Grundkörper 3 eine Wendel 18 aufweist, die im Vergleich zum Schneidelement 5 zurückgesetzt ist. An der Wendel 18 sind abwechselnd Beschichtungen aus triboelektrisch unterschiedlich wirkenden Materialien angeordnet, sodass zwei Aufladebereiche 1, 2 gebildet werden.

## Patentansprüche

1. **Werkzeug,** eingerichtet zur spanenden Bearbeitung von Werkstoffen, insbesondere Zerspanungswerkzeug wie Sägewerkzeug, Fräswerkzeug, Schleifwerkzeug oder Bohrwerkzeug, umfassend einen Grundkörper (3) und wenigstens ein am Grundkörper (3) angeordnetes Schneidelement (5) **dadurch gekennzeichnet, dass** am Werkzeug mindestens zwei triboelektrisch unterschiedlich wirkende Aufladebereiche (1, 2) vorgesehen sind, die den beim Spanen entstehenden Feinstaub durch entgegengesetzte triboelektrische Aufladung zu Feinstaubagglomeraten agglomerieren.

2. Werkzeug nach Anspruch 1, **dadurch gekennzeichnet, dass** wenigstens einer der Aufladebereiche (1, 2) durch ein Material gebildet ist, das vom Material des Schneidelements (5) und des Grundkörpers (3) unterschiedlich ist.

3. Werkzeug nach Anspruch 1 oder 2, **dadurch gekennzeichnet, dass** ein erster Aufladebereich (1) mit einem ersten Material und ein zweiter Aufladebereich (2) mit einem zweiten Material vorgesehen sind, wobei die Materialien der Aufladebereiche (1, 2) vom Material/den Materialien des Schneidelements (5) und des Grundkörpers (3) unterschiedlich sind.

4. Werkzeug nach einem der Ansprüche 1 bis 3, **dadurch gekennzeichnet, dass** die Bereiche (1, 2) nicht am Schneidelement (5) des Werkzeugs (4) angeordnet sind und/oder nicht durch das Schneidelement (5) des Werkzeugs (4) gebildet sind.

5. Werkzeug nach einem der Ansprüche 1 bis 4, **dadurch gekennzeichnet, dass** die Bereiche (1, 2) streifenförmig, segmentförmig und/oder sektorförmig am Werkzeug (4) angeordnet sind.

6. Werkzeug nach einem der Ansprüche 1 bis 5, **dadurch gekennzeichnet, dass** entlang einer Bearbeitungsrichtung (16) und/oder einer Bewegungsrichtung (19) des Werkzeugs (4) abwechselnd ein erster Aufladebereich (1) und ein zweiter Aufladebereich (2) vorgesehen sind.

7. Werkzeug nach einem der Ansprüche 1 bis 6, **dadurch gekennzeichnet, dass** ein erster Bereich (1) dazu ausgebildet ist, Holz-Feinstaub, insbesondere Hartholz-Feinstaub, triboelektrisch positiv aufzuladen, und dass ein zweiter Bereich (2) dazu ausgebildet ist, Holz-Feinstaub, insbesondere Hartholz-Feinstaub, triboelektrisch negativ aufzuladen.

8. Werkzeug nach einem der Ansprüche 1 bis 7, **dadurch gekennzeichnet, dass** das Werkzeug (4) ein Schleifwerkzeug (6) ist, und
- dass mehrere Schneidelemente (5) vorgesehen sind, die als Schleifbürsten (7) ausgebildet sind, wobei das Material der Schleifbürsten (7) in einem ersten Bereich (1) vom Material der Schleifbürsten (7) in einem zweiten Bereich (2) unterschiedlich ist,
oder
- dass mehrere Schneidelemente (5) von einem Bindemittel (8) am Werkzeug (4) gehalten sind, wobei das Material des Bindemittels (8) in einem ersten Bereich (1) vom Material des Bindemittels (8) in einem zweiten Bereich (2) unterschiedlich ist.

9. Werkzeug nach einem der Ansprüche 1 bis 7, **dadurch gekennzeichnet, dass** das Werkzeug (4) ein Sägewerkzeug (9) mit einem Sägeblatt (10) ist, dass mehrere Schneidelemente (5) vorgesehen sind, die als Sägezähne (11) ausgebildet sind, und dass die Bereiche (1, 2) an der Planfläche (14) des Sägeblatts (10) angeordnet sind.

10. Werkzeug nach einem der Ansprüche 1 bis 7, **dadurch gekennzeichnet, dass** das Werkzeug (4) ein Fräswerkzeug (12) oder ein Bohrwerkzeug (13) ist, und dass die Bereiche (1, 2) am Grundkörper (3) des Fräswerkzeugs (12) oder des Bohrwerkzeugs (13) angeordnet sind.

11. **Werkzeugmaschine** umfassend ein Werkzeug nach einem der Ansprüche 1 bis 10.

12. **Verfahren** zur Verringerung der Feinstaubemissionen bei der spanenden Bearbeitung von Werkstoffen durch ein Werkzeug, insbesondere durch ein Zerspanungswerkzeug wie ein Sägewerkzeug, ein Fräswerkzeug, ein Schleifwerkzeug oder ein Bohrwerkzeug, umfassend folgende Schritte:
- spanende Bearbeitung des Werkstoffs mit dem Werkzeug, wobei bei der spanenden Bearbeitung Feinstaub entsteht,
- Agglomerieren des Feinstaubs zu Feinstaubagglomeraten durch entgegengesetztes triboelektrisches Aufladen des Feinstaubs durch mindestens zwei triboelektrisch unterschiedlich wirkende Aufladebereiche des Werkzeugs.

13. Verfahren nach Anspruch 12, **dadurch gekennzeichnet, dass** das Verfahren zusätzlich folgenden Schritt umfasst:
- Absaugen der im Wesentlichen elektrisch neutralen Agglomerate.

14. Verfahren nach Anspruch 12 oder 13, **dadurch gekennzeichnet, dass** wenigstens ein triboelektrisch wirkender Bereich des Werkzeugs dazu ausgebildet ist, den Feinstaub triboelektrisch positiv aufzuladen, und dass wenigstens ein weiterer triboelektrisch wirkender Bereich des Werkzeugs dazu ausgebildet ist, den Feinstaub triboelektrisch negativ aufzuladen.

## Claims

1. A tool adapted for machining of materials, in particular a cutting tool such as a sawing tool, milling tool, grinding tool or drilling tool, comprising a base body (3) and at least one cutting element (5) arranged on the base body (3), **characterised in that** at least two triboelectrically differently acting charging regions (1, 2) are provided on the tool, which agglomerate the fine dust produced during machining into fine dust agglomerates by opposing triboelectric charging.

2. The tool according to claim 1, **characterised in that** at least one of the charging regions (1, 2) is formed of a material that is different from the material of the cutting element (5) and the base body (3).

3. The tool according to claim 1 or 2, **characterised in that** a first charging region (1) with a first material and a second charging region (2) with a second material are provided, the materials of the charging regions (1, 2) being different from the material(s) of the cutting element (5) and the base body (3).

4. The tool according to one of claims 1 to 3, **characterised in that** the regions (1, 2) are not arranged on the cutting element (5) of the tool (4) and/or are not formed by the cutting element (5) of the tool (4).

5. The tool according to one of claims 1 to 4, **characterised in that** the regions (1, 2) are arranged on the tool (4) in a strip-shaped, segment-shaped and/or sector-shaped manner.

6. The tool according to any one of claims 1 to 5, **characterised in that** a first charging region (1) and a second charging region (2) are provided alternately along a processing direction (16) and/or a movement direction (19) of the tool (4).

7. The tool according to one of claims 1 to 6, **characterised in that** a first region (1) is designed to triboelectrically positively charge wood fine dust, in particular hardwood fine dust, and that a second region (2) is designed to triboelectrically negatively charge wood fine dust, in particular hardwood fine dust.

8. The tool according to one of claims 1 to 7, **characterised in that** the tool (4) is a grinding tool (6), and
- **in that** a plurality of cutting elements (5) is provided which are designed as grinding brushes (7), the material of the grinding brushes (7) in a first region (1) being different from the material of the grinding brushes (7) in a second region (2),
or
- **in that** a plurality of cutting elements (5) is held on the tool (4) by a binder (8), the material of the binder (8) in a first region (1) being different from the material of the binder (8) in a second region (2).

9. The tool according to one of claims 1 to 7, **characterised in that** the tool (4) is a sawing tool (9) with a saw blade (10), **in that** a plurality of cutting elements (5) is provided which are in the form of saw teeth (11), and **in that** the regions (1, 2) are arranged on the plane surface (14) of the saw blade (10).

10. The tool according to one of claims 1 to 7, **characterised in that** the tool (4) is a milling tool (12) or a drilling tool (13), and **in that** the regions (1, 2) are arranged on the base body (3) of the milling tool (12) or the drilling tool (13).

11. A **machine tool** comprising a tool according to one of claims 1 to 10.

12. A **method** for reducing fine dust emissions during the machining of materials by a tool, in particular by a cutting tool such as a sawing tool, a milling tool, a grinding tool or a drilling tool, comprising the following steps:
- machining of the material with the tool, wherein fine dust is produced during machining,
- agglomerating the fine dust into fine dust agglomerates by opposing triboelectric charging of the fine dust by at least two triboelectrically differently acting charging regions of the tool.

13. The method according to claim 12, **characterised in that** the method additionally comprises the following step:
- aspirating the substantially electrically neutral agglomerates.

14. The method according to claim 12 or 13, **characterised in that** at least one triboelectrically acting region of the tool is designed to triboelectrically positively charge the fine dust, and that at least another triboelectrically acting region of the tool is designed to triboelectrically negatively charge the fine dust.

## Revendications

1. **Outil** conçu pour l'usinage par enlèvement de copeaux de matériaux, en particulier outil de coupe tel qu'un outil de sciage, un outil de fraisage, un outil de meulage ou un outil de forage, comprenant un corps de base (3) et au moins un élément de coupe (5) disposé sur le corps de base (3), **caractérisé en ce que** au moins deux zones de charge (1, 2) à effet triboélectrique différent sont prévues sur l'outil, qui agglomèrent la poussière fine produite lors de l'usinage par enlèvement de copeaux en agglomérats de poussière fine par une charge triboélectrique opposée.

2. Outil selon la revendication 1, **caractérisé en ce qu'**au moins l'une des zones de charge (1, 2) est formée par un matériau qui est différent du matériau de l'élément de coupe (5) et du corps de base (3).

3. Outil selon la revendication 1 ou 2, **caractérisé en ce qu'**une première zone de charge (1) avec un premier matériau et une deuxième zone de charge (2) avec un deuxième matériau sont prévues, les matériaux des zones de charge (1, 2) étant différents du ou des matériaux de l'élément de coupe (5) et du corps de base (3).

4. Outil selon l'une des revendications 1 à 3, **caractérisé en ce que** les zones (1, 2) ne sont pas disposées sur l'élément de coupe (5) de l'outil (4) et/ou ne sont pas formées par l'élément de coupe (5) de l'outil (4).

5. Outil selon l'une des revendications 1 à 4, **caractérisé en ce que** les zones (1, 2) sont disposées en forme de bande, de segment et/ou de secteur sur l'outil (4).

6. Outil selon l'une des revendications 1 à 5, **caractérisé en ce que** le long d'une direction d'usinage (16) et/ou d'une direction de déplacement (19) de l'outil (4), une première zone de charge (1) et une deuxième zone de charge (2) sont prévues en alternance.

7. Outil selon l'une des revendications 1 à 6, **caractérisé en ce qu'**une première zone (1) est configurée pour charger triboélectriquement de manière positive de la poussière fine de bois, particulièrement de la poussière fine de bois dur, et **en ce qu'**une deuxième zone (2) est configurée pour charger triboélectriquement de manière négative de la poussière fine de bois, particulièrement de la poussière fine de bois dur.

8. Outil selon l'une des revendications 1 à 7, **caractérisé en ce que** l'outil (4) est un outil de meulage (6) et
- **en ce que** plusieurs éléments de coupe (5) sont prévus, qui sont réalisés sous forme de brosses abrasives (7), le matériau des brosses abrasives (7) dans une première zone (1) étant différent du matériau des brosses abrasives (7) dans une deuxième zone (2)
ou
- **en ce que** plusieurs éléments de coupe (5) sont maintenus sur l'outil (4) par un moyen de liaison (8), le matériau du moyen de liaison (8) dans une première zone (1) étant différent du matériau du moyen de liaison (8) dans une deuxième zone (2).

9. Outil selon l'une des revendications 1 à 7, **caractérisé en ce que** l'outil (4) est un outil de sciage (9) avec une lame de scie (10), **en ce que** plusieurs éléments de coupe (5) sont prévus, qui sont conçus comme des dents de scie (11), et **en ce que** les zones (1, 2) sont disposées sur la surface plane (14) de la lame de scie (10).

10. Outil selon l'une des revendications 1 à 7, **caractérisé en ce que** l'outil (4) est un outil de fraisage (12) ou un outil de forage (13), et **en ce que** les zones (1, 2) sont disposées sur le corps de base (3) de l'outil de fraisage (12) ou de l'outil de forage (13).

11. **Machine-outil** comprenant un outil selon l'une des revendications 1 à 10.

12. **Procédé** pour réduire les émissions de poussière fine lors de l'usinage par enlèvement de copeaux de matériaux par un outil, en particulier par un outil d'enlèvement de copeaux tel qu'un outil de sciage, un outil de fraisage, un outil de meulage ou un outil de forage, comprenant les étapes suivantes :
- usinage du matériau par enlèvement de copeaux avec l'outil, l'usinage par enlèvement de copeaux produisant de la poussière fine,
- agglomération de la poussière fine en agglomérats de poussière fine par une charge triboélectrique opposée de la poussière fine par au moins deux zones de charge de l'outil à effet triboélectrique différent.

13. Procédé selon la revendication 12, **caractérisé en ce que** le procédé comprend en outre l'étape suivante :
- aspiration des agglomérats sensiblement électriquement neutres.

14. Procédé selon la revendication 12 ou 13, **caractérisé en ce qu'**au moins une zone à effet triboélectrique de l'outil est conçue pour charger triboélectriquement de manière positive la poussière fine, et **en ce qu'**au moins une autre zone à effet triboélectrique de l'outil est conçue pour charger triboélectriquement de manière négative la poussière fine.
